# EUROPEAN PATENT APPLICATION

(11) **EP 4 760 069 A1**
(43) Date of publication of application: **17.06.2026**
(21) Application number: 24220136.6
(22) Date of filing: 16.12.2024
(51) Int. Cl.: F01N 3/20, F01N 13/00, F01N 13/08, F01N 13/10

(54) **EXHAUST GAS AFTER TREATMENT DEVICE**

(71) Applicant: WinGD Ltd., 8400 Winterthur (CH)
(72) Inventor: Sönnichsen, Samuel, 8405 Winterthur (CH)
(74) Representative: Hepp Wenger Ryffel AG

(57) **Abstract**

The invention relates to an exhaust gas after treatment device for an internal combustion engine with at least two cylinders, preferably with an inner diameter of at least 200 mm each. The exhaust gas treatment device (100) comprises an elongated exhaust manifold (10) extending in a longitudinal direction (L) and having at least one inlet (11) for exhaust gas from each cylinder. The exhaust gas treatment device (100) comprises a catalyst container (20) comprising at least two catalyst elements (21), in particular SCR catalyst elements. The exhaust manifold (10) is fluidly connected or connectable to the catalyst container (20) for allowing, during operation, a flow of the exhaust gas from the exhaust manifold (10) through the catalyst elements (21). The catalyst elements (21) are arranged in at least two units (23, 24) of catalyst elements (21) which units are flowable in parallel and in the same flow direction (F) by the exhaust gas. The units (23, 24) are arranged such that they do at least not fully overlap in the flow direction (F). The exhaust gas treatment device (100) comprises a main outlet pipe (2), preferably arranged at a first longitudinal end (5) of the exhaust gas treatment device, fluidly connected or connectable to the catalyst container (20). The exhaust gas treatment device (100) comprises a bypass outlet pipe (32), preferably arranged at the first longitudinal end (5) of the exhaust gas treatment device, fluidly connected or connectable to the elongated exhaust manifold (10).

## Description

The invention relates to an exhaust gas after treatment device for an internal combustion engine and an internal combustion engine.

The present invention preferably relates to an internal combustion engine like a large marine or ship engine or a stationary engine whose cylinders have an inner diameter of at least 200 mm.

The engine preferably is a two-stroke engine or a two-stroke cross-head engine. The engine can be a diesel or a gas engine, a dual fuel or a multi fuel engine. Burning of liquid and or gaseous fuels in such engines is possible as well as self-igniting or forced igniting.

The internal combustion engine can be a longitudinally scavenged two-stroke engine.

The term internal combustion engine also refers to large engines which can be operated not only in Diesel mode, which is characterized by the self-ignition of the fuel, but also in Otto mode, which is characterized by the forced ignition of the fuel, or in mixtures of the two. Furthermore, the term internal combustion engine includes in particular dual-fuel engines and large engines in which the self-ignition of the fuel is used for the forced ignition of another fuel. Forced ignition can be achieved by use of a pre-chamber, a spark plug and/or a pilot fuel.

Engine speed is preferably below 800 RPM, especially for 4-stroke engines, and more preferably below 200 RPM, especially for 2-stroke engines, which indicates the designation of low-speed engines.

Fuel can be Diesel or marine Diesel oils or heavy fuel oils or emulsions or slurries or methanol or ethanol as well as gases, like liquid natural gas (LNG), liquid petrol gas (LPG), natural gas (NG), petrol gas (PG) and so on.

Further possible fuels comprise: LBG (Liquefied Biogas), biological fuels (e. g. oil made from algae or seaweed), ammonia, hydrogen, and synthetic fuels from CO2 (e.g. made by Power-To-Gas or Power-To-Liquid).

Large ships, in particular vessels for transport of goods, usually are powered by internal combustion engines, in particular diesel and/or gas engines, mostly two-stroke, cross head engines.

Typically, the exhaust gas from the combustion process needs to be cleaned to comply with the existing rules such as IMO Tier III.

The IMO emission standards commonly referred to as Tier I ... III standards inter alia define the NOₓ emission standards for existing and new marine engines. SCR (selective catalytic reduction) technology is used to reduce the level of nitrogen oxides (NOx) in an exhaust gas of a combustion engine.

EP2527611 A1 discloses an exhaust gas after treatment device for a large diesel engine comprising an elongated exhaust manifold with a plurality of inlets and a catalyst container. The exhaust manifold and the catalyst container are arranged essentially parallel next to one another and are delimited from one another by at least one partition running in each case in the longitudinal direction. The exhaust manifold is connected to the catalyst container via one or more orifices provided in the partition or partitions, in order to conduct the exhaust gases during operation through the catalyst elements to the respective outlet.

The catalyst container may comprise two groups of catalysts which are arranged in parallel and which are flowed through from the lateral sides of the catalyst container to the middle. There is an additional orifice in the middle of the partition which allows bypassing the catalyst elements. The exhaust gases are fed to one or two turbochargers from the centre of the catalyst container.

Each group of catalysts needs in individual orifice with a respective valve.

Exhaust gas after treatment devices regularly have to be fitted between the cylinders and the turbocharger. An outlet in the middle of the catalyst container may cause extra space and extra piping in the engine room. Any replacement of the after treatment device or a retrofit of an engine with the after treatment device may be extremely difficult or even impossible.

In an alternative embodiment according to CN 215907943 U the passage of exhaust gas through the catalyst takes place only in one flow direction. Catalyst elements may be arranged in an alternating arrangement to compensate for a high pressure drop. The catalyst container comprises a collector section and exhaust gas may be guided directly from the exhaust manifold to the collector section to bypass the catalysts. This arrangement provides for a compact design, but bears the risk of leaks, as various valves have to be arranged within the exhaust gas after treatment device.

The invention is based on the task of providing an exhaust gas treatment device, an internal combustion engine, and a catalyst module which at least in part avoid the disadvantages of the prior art solutions, which, in particular, provide for an easy handling and a reliable aftertreatment.

According to a first aspect of the invention the object is achieved by the characteristics of the independent claim 1.

According to the invention an exhaust gas treatment device is for an internal combustion engine with at least two cylinders, preferably with an inner diameter of at least 200 mm each, in particular a dual-fuel internal combustion engine.

The exhaust gas treatment device comprises an elongated exhaust manifold extending in a longitudinal direction and having at least one inlet for exhaust gas from each cylinder, preferably one inlet for each cylinder.

The at least two cylinders are preferably arranged with parallel axial directions and adjacent to each other.

Preferably, a plurality of inlets is arranged next to each other along the lengths of the exhaust manifold, which defines the direction of the elongated extension and thereby the longitudinal direction.

The longitudinal direction corresponds to a direction perpendicular to the axial directions of the cylinders.

The exhaust gas treatment device comprises a catalyst container comprising at least two catalyst elements, in particular SCR catalyst elements.

The exhaust manifold is fluidly connected or connectable to the catalyst container for allowing, during operation, a flow of the exhaust gas from the exhaust manifold through the catalyst elements.

The exhaust manifold may be fluidly connected or connectable to the catalyst container close to one of the longitudinal ends.

The catalyst elements are arranged in at least two units of catalyst elements. The units are flowable in parallel and in the same flow direction by the exhaust gas.

A parallel exhaust gas routing may provide for a low pressure drop.

Preferably, the flow direction corresponds to the longitudinal direction.

Each unit comprises at least one catalyst element. Each unit may comprise at least two catalyst elements arranged in series and/or arranged in parallel with respect to the flow direction.

The units are arranged such that they do at least not fully overlap in the flow direction. Preferably, the units do not overlap in the flow direction.

The units may be arranged such that while a first portion of the exhaust gas passes through a first unit, a second portion of the exhaust gas flows around at least a part of the first unit and then enters a second unit.

The first and the second unit may be arranged such that their projections to a plane perpendicular to the flow direction overlap.

This allows a slim design of the exhaust gas treatment device. For two units, parallelly arranged as described above, the catalyst container only needs a width and/or height which is smaller than the sum of the widths and/or heights of the units.

A slim design provides for a smaller width of the reactor housing, which results in a reduced weight and a reduced amount of steel.

Preferably, the catalyst container in use is flowable only in one flow direction.

The exhaust gas treatment device comprises a main outlet pipe, fluidly connected or connectable to the catalyst container.

The exhaust gas treatment device comprises a bypass outlet pipe, fluidly connected or connectable to the elongated exhaust manifold. The bypass outlet pipe may be used for exhaust gas released from the exhaust gas treatment device without passing the catalyst elements.

Preferably, the main outlet pipe is arranged at a first longitudinal end of the exhaust gas treatment device, more preferably, opposite to the longitudinal end, where the fluid connection between the exhaust manifold and the catalyst container is arranged. Hence, the exhaust gas may flow from one longitudinal end to the opposite longitudinal end when passing the catalyst container.

Preferably, the bypass outlet pipe is arranged at the same first longitudinal end of the exhaust gas treatment device, where the main outlet pipe is arranged.

The main outlet pipe may be arranged at an end face of the catalyst container.

The bypass outlet pipe may be arranged at an end face of the exhaust manifold.

Thus, exhaust gas may be released from the exhaust gas treatment device at one longitudinal end.

The exhaust gas may be fed to a turbocharger from this longitudinal end. Especially, when the exhaust gas after treatment device is retrofitted in a combustion engine, for this arrangement the gas connections can be easily provided.

Preferably, the exhaust manifold and the catalyst container are arranged adjacently next to one another and are delimited from one another by at least one partition. The exhaust manifold may be is fluidly connected or connectable to the catalyst container via an orifice provided in the at least one partition. Hence the partition comprises one opening for guiding exhaust gas from the exhaust manifold to the catalyst elements.

During operation the exhaust gases may be guided through the orifice to the catalyst elements and to the main outlet pipe.

Preferably, the orifice is arranged close to one of the longitudinal ends of the elongated exhaust manifold, preferably opposite to the longitudinal end, where the main outlet pipe and the bypass outlet pipe are arranged. The exhaust gas may flow from one longitudinal end to the opposite longitudinal end when passing the catalyst container.

Within this application "close to a longitudinal end" means that the distance to the longitudinal end is smaller than the distance between the longitudinal end and the inlet arranged closest to the same longitudinal end.

As all units are flowable in parallel and in the same flow direction by the exhaust gas, no more openings are necessary in the partition.

The partition may be formed by a plate or a sheet metal separating the inner volume of the exhaust manifold and the inner volume of the catalyst container from each other. Alternatively, the exhaust manifold and the catalyst container each may comprise walls which together form the partition.

A bypass outlet valve, preferably a butterfly valve, may be arranged in the bypass outlet pipe.

A main outlet valve, preferably a butterfly valve, may be arranged in the main outlet pipe.

Valves arranged in pipe may provide for a reliable closing and opening. A leakage of exhaust gas, in particular of bypassed exhaust gas, may be prevented.

The main outlet pipe and the bypass outlet pipe may merge into an exhaust line, preferably downstream the bypass outlet valve and/or downstream the main outlet valve. This main outlet pipe may be fluidly connected or connectable to a turbocharger.

While the units are functionally arranged in parallel, geometrically the units may be arranged one after the other.

At least a first unit may be arranged closer to a first side wall of the catalyst container than to the opposite side wall of the catalyst container and a first unit bypass passage may be arranged between the first unit and the opposite side wall.

At least a second unit may be arranged closer to the opposite side wall than to the first side wall and a second unit bypass passage may be arranged between the second unit and the first side wall. When a first portion of the exhaust gas passes the first unit a second portion is guided though the first unit bypass passage before it enters the second unit. When the first portion leaves the first unit, it is guided through the second unit bypass passage.

Alternatively, at least a first unit may be arranged closer to a top wall of the catalyst container as to the bottom wall and a first unit bypass passage may be arranged between the first unit and the bottom wall, while at least a second unit is arranged closer to the bottom wall as to the top wall and a second unit bypass passage may be arranged between the second unit and the top wall.

Alternatively, a concentric arrangement is possible, wherein a first unit bypass passage is arranged within a first unit and a second unit bypass passage is arranged around a second unit or vice versa.

At least one unit of catalyst elements may be arranged in a frame to form a catalyst module. The catalyst module may be insertable into or removable from the catalyst container as a whole, which facilitates handling during maintenance and catalyst element replacement.

The exhaust gas treatment device may comprise a plurality of catalyst modules, which may be ranged in series.

The exhaust gas treatment device may comprise at least one catalyst module, wherein a first unit and a second unit of catalyst elements are arranged in one common frame. The first unit and the second unit of such a catalyst module are arranged in the frame such that the first unit and the second unit are flowable in parallel and in the same flow direction by the exhaust gas. The first unit and the second units are arranged in this catalyst module such that they do not fully overlap in the flow direction.

The frame may provide space for the first and the second unit as well as for a first unit bypass and a second unit bypass.

The first unit may be arranged closer to a first side wall defined by the frame than to the opposite side wall defined by the frame and a first unit bypass passage may be arranged between the first unit and the opposite side wall. The second unit may be arranged closer to the opposite side wall than to the first side wall and a second unit bypass passage may be arranged between the second unit and the first side wall. The first side wall may be a left or right sidewall or a top or bottom sidewall. Alternatively, the first and the second unit may be arranged concentrically in the frame.

Catalyst modules may be assembled outside the catalyst container. Thus, handling during maintenance and repairs are simplified.

The exhaust gas treatment device may comprise a plurality of units which are arranged in pairs of a first and a second unit in respective frames to form a plurality of respective catalyst modules. These modules may be arranged in series.

The individual catalyst modules may be braced against each other in the catalyst container.

The catalyst container may comprise a housing having a support for guiding and supporting at least one catalyst module. The frame of the at least one catalyst module may comprise a complementary profile for engaging with the support.

Preferably, all catalyst modules are guided and supported by the profile of the catalyst container.

Preferably the support comprises at least one rail and/or at least one holding rib. The at least one rail may extend in longitudinal direction.

The catalyst module may be shifted on the at least one rail along the longitudinal direction until an intended position is reached.

In this position the catalyst module may be fixed to a holding rib.

The frame may comprise sealings to seal against neighboring catalyst modules and/or the against to housing of the catalyst container.

Alternatively, or additionally, a seal may be arranged on the support.

The catalyst container may comprise a closable opening for inserting and removing the catalyst module. In particular the closable opening is arranged at a second longitudinal end, opposite the first longitudinal end, where the main outlet pipe and/or the bypass outlet pipe are arranged.

The catalyst container may comprise a closure element, such as a flap, a door or simply a lid, to close the closable opening.

As the turbocharger may be arranged close to the first longitudinal end, the second longitudinal end provides enough space for insertion and removal of catalyst modules.

The catalyst container may comprise a mounting frame for fixing a catalyst module within the catalyst container.

The mounting frame preferably comprises a complementary profile with respect to the support of the catalyst container.

Several catalyst modules may be arranged in series. Each catalyst module may be fixed with a mounting frame. Alternatively, a series of catalyst modules can be placed side by side and only the last catalyst module is secured by the mounting frame to the catalyst container, which secures the whole series.

The mounting frame may comprise holes for receiving fixing elements, preferably screws, for connecting to the catalyst container, for example to a holding rib, and/or to the frame of the catalyst module.

The mounting frame may comprise a sealing, in particular a metal mesh sealing, which seals the mounting frame against the catalyst container when the mounting frame is fixed. Sealing mats may be arranged between the catalyst modules.

The catalyst container may comprise a stop element, mounted or mountable to the support, comprising a stop surface for contacting one of the frames. The stop element preferably comprises a complementary profile with respect to the support of the catalyst container.

The stop element preferably comprises holes for receiving fixing elements, preferably screws, for connecting to the catalyst container.

The catalyst container may comprise at least one catalyst module with a first unit and a second unit of catalyst elements being arranged in a common frame, in particular arranged in parallel as described above, wherein the catalyst container comprises at least one additional unit of catalyst elements arranged downstream of this at least one catalyst module and configured such that the additional unit cannot be bypassed.

According to a second aspect of the invention the object is achieved by an internal combustion engine. According to the invention, the internal combustion engine comprises at least two cylinders, in particular up to eight cylinders, advantageously up to six cylinders, and at least one exhaust gas treatment device as described above.

The internal combustion engine may comprise a turbocharger which is fluidly connectable or connected to the bypass outlet pipe and/or to the main outlet pipe. The turbocharger may be fluidly connectable or connected to an exhaust line, which itself is fluidly connectable or connected to the bypass outlet pipe and/or to the main outlet pipe.

In particular, the turbocharger is arranged on the first longitudinal end of the exhaust gas treatment device, where the bypass outlet pipe and/or to the main outlet pipe may be connected to the exhaust gas treatment device.

According to a third aspect of the invention the object is achieved by a catalyst module for inserting into a housing of an exhaust gas treatment device as described above.

According to the invention, the catalyst module comprises a frame, at least a first unit of catalyst elements and at least a second unit of catalyst elements. The first unit and the second unit are arranged such that the first and the second units are flowable in parallel and in the same flow direction by the exhaust gas. The first and the second units are arranged in the catalyst module such that they do not fully overlap in the flow direction.

The first and the second unit preferably comprise catalyst elements arranged in series and/or in parallel as described above.

The units preferably are arranged in the catalyst module as described above.

The catalyst module preferably is a catalyst module as described above and in particular comprises a frame with a complementary profile with respect to the support of a housing of the catalyst container.

Further advantageous aspects of the invention are explained in the following by means of exemplary embodiments and the figures. Functionally equal elements are provided with the same reference signs. In the drawings, in a schematic manner:
- Figure 1:: shows a schematic illustration of first example of an exhaust gas treatment device in a side view;
- Figure 2:: shows a schematic illustration of a second example of an exhaust gas treatment device in a side view;
- Figure 3:: shows a schematic illustration of a third example of an exhaust gas treatment device in a perspective view;
- Figure 4:: shows a schematic illustration of the third example of an exhaust gas treatment device in a top view;
- Figure 5:: shows a schematic illustration of a fourth example of an exhaust gas treatment device in a top view;
- Figure 6:: shows a schematic illustration of the second example of an exhaust gas treatment device in a top view;
- Figure 7:: shows a detail of a fifths example of an exhaust gas treatment device a perspective view;
- Figure 8:: shows a detail of a fifths example of an exhaust gas treatment device a perspective view;
- Figure 9:: shows a detail of a fifths example of an exhaust gas treatment device a perspective view;
- Figure 10:: shows a detail of a fifths example of an exhaust gas treatment device a perspective view;
- Figure 11:: shows a detail of a fifths example of an exhaust gas treatment device a perspective view.

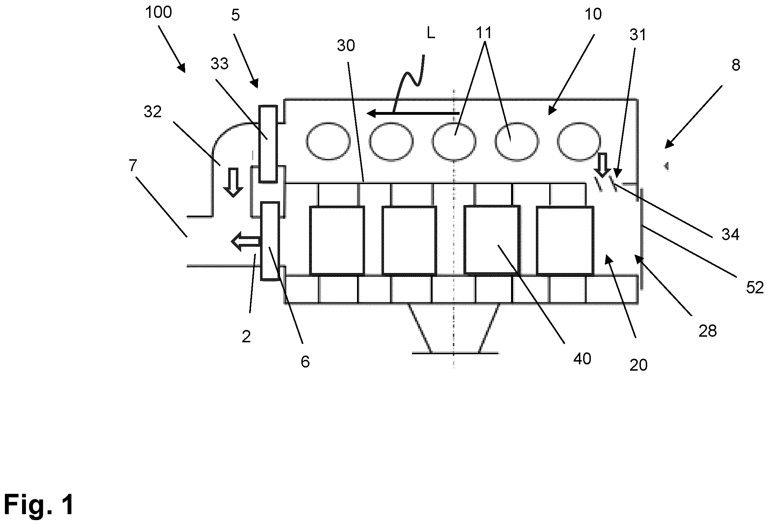

Figure 1 shows a schematic illustration of first example of an exhaust gas treatment device 100 in a side view.

The exhaust gas treatment device 100 comprises an elongated exhaust manifold 10 extending in a longitudinal direction L and has five inlets 11 for exhaust gas from cylinders (not shown in the figures).

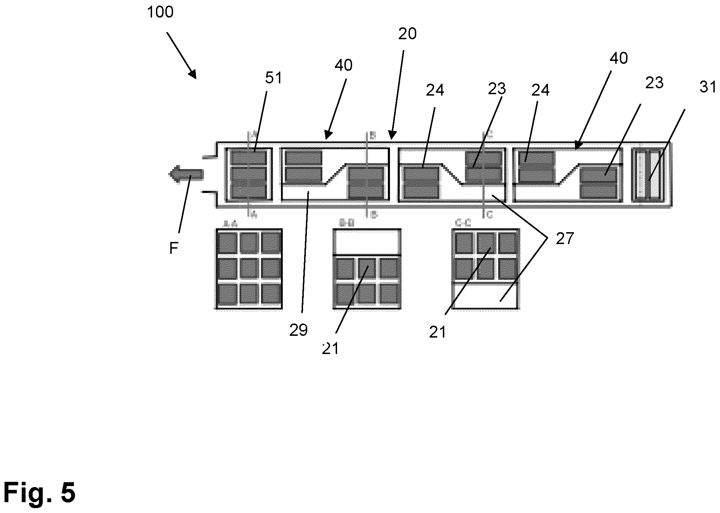

The exhaust gas treatment device 100 further comprises a catalyst container 20 comprising four catalyst modules 40 having catalyst units 23, 24 with catalyst elements 21 (see figure 5).

In use all catalyst modules 40 are flowed through in the same direction.

The exhaust manifold 10 is fluidly connectable to the catalyst container 20 for allowing, during operation, a flow of the exhaust gas from the exhaust manifold 10 through the catalyst elements 21 in the catalyst modules 40.

The exhaust manifold 10 and the catalyst container 20 are arranged adjacently next to one another and are delimited from one another by a partition 30. The exhaust manifold 10 is fluidly connected or connectable to the catalyst container 20 via an orifice 31 provided in the at least one partition 30. The orifice 31 may be opened and closed with an orifice valve 34.

The exhaust gas treatment device 100 comprises a main outlet pipe 2, arranged at a first longitudinal end 5 of the exhaust gas treatment device 100, which is fluidly connected or connectable to the catalyst container 20. The exhaust gas treatment device 100 further comprises a bypass outlet pipe 32, also arranged at the first longitudinal end 5 of the exhaust gas treatment device 100, fluidly connected or connectable to the elongated exhaust manifold 10.

A bypass outlet valve 33, is arranged in the bypass outlet pipe 32. A main outlet valve 6 is arranged in the main outlet pipe 2. The valves for example may be butterfly valves.

When the orifice valve 34 and main outlet valve 6 are open, the exhaust gas may flow through the orifice 31 into the catalyst container 20 and through the catalyst modules 40. The exhaust gas leaves the catalyst container 20 via the main outlet pipe 2.

When the bypass outlet valve 33 is open, exhaust gas may leave the exhaust manifold 10 through the bypass outlet pipe 32. When at the same time the orifice valve 34 is closed, all exhaust gas is guided through the bypass outlet pipe 32.

The valves 33, 34 and 6 may be controlled valves such that the opening degree may be set and the percentage of the exhaust gas passing the orifice 31 and the bypass pipe 32 may be controlled by a control unit.

The exhaust gas treatment device 100 may comprise a control unit (not shown in the figures) for setting the valves 33, 34 and 6.

Downstream the bypass outlet valve 33 and the main outlet valve 6 the bypass outlet pipe 32 and the main outlet pipe merge into an exhaust line 7.

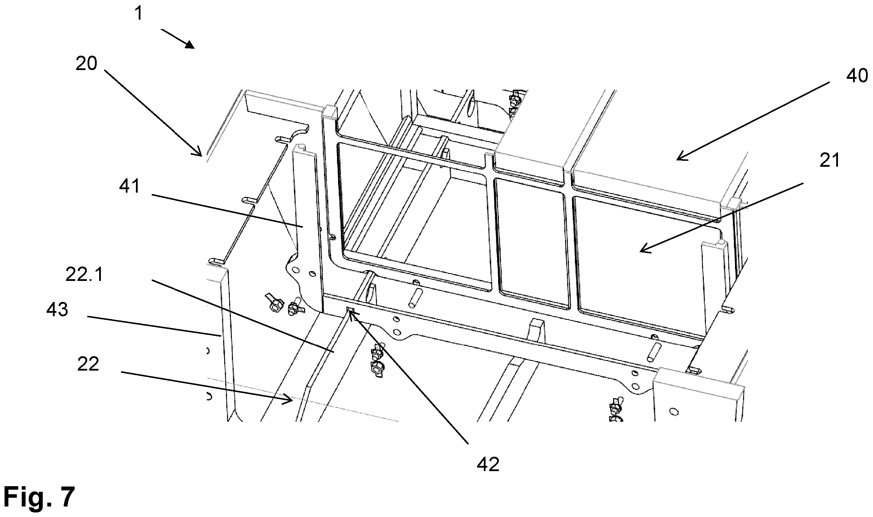

At the second lateral end 8 the catalyst container 20 comprises a closable opening 28 for inserting and removing the catalyst modules 40, which in the catalyst container 40 are guided on rails 22.1 (see figure 7). The opening may be closed with a closure element 52, for example a sealing cap or a hinged door.

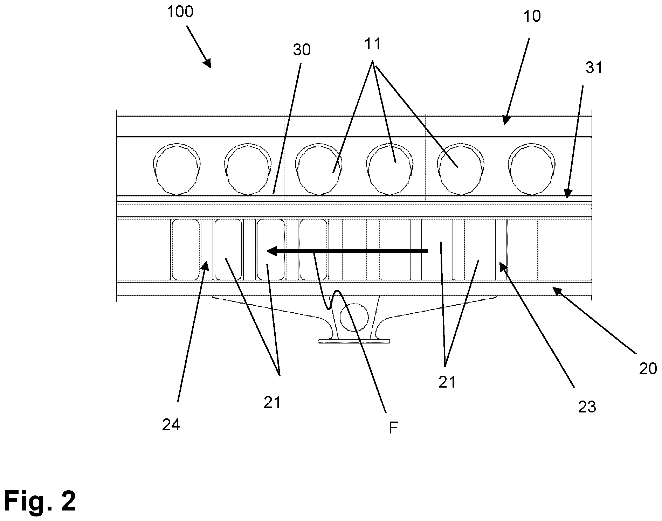

Figure 2 shows a schematic illustration of a second example of an exhaust gas treatment device 100 in a side view.

The exhaust manifold 10 comprises inlets 11 for receiving the exhaust gas and is connected to the catalyst container 20 via an orifice 31 provided in the partition 30, in order to conduct the exhaust gas from the exhaust manifold 10 through the catalyst elements 21 to the collector section 22 during operation.

The catalyst elements 21 are arranged in two units 23, 24 of catalyst elements 21 which are flowable in parallel and in the same flow direction F by the exhaust gas. Exhaust gas entering the catalyst container 20 through the orifice 31 passes one of the two units 23, 24.

In this example, several catalyst elements 21 are arranged in series with respect to the flow direction F within one unit 23, 24. Alternatively or additionally, the catalyst elements 21 may be arranged in parallel.

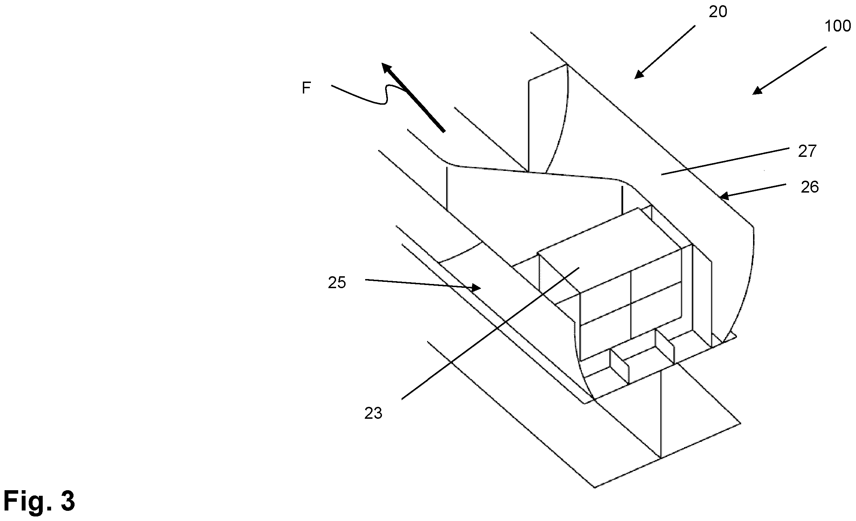

Figure 3 shows a detail of a third example of an exhaust gas after treatment device 100 in a perspective view.

A first unit 23 is arranged closer to a first side wall 25 of the catalyst container 20 than to the opposite side wall 26.

Between the first unit 23 and the opposite side wall 26, a first unit bypass passage 27 is arranged.

Exhaust gas flowing in flow direction F either enters the first unit 23 or the first unit bypass passage 27.

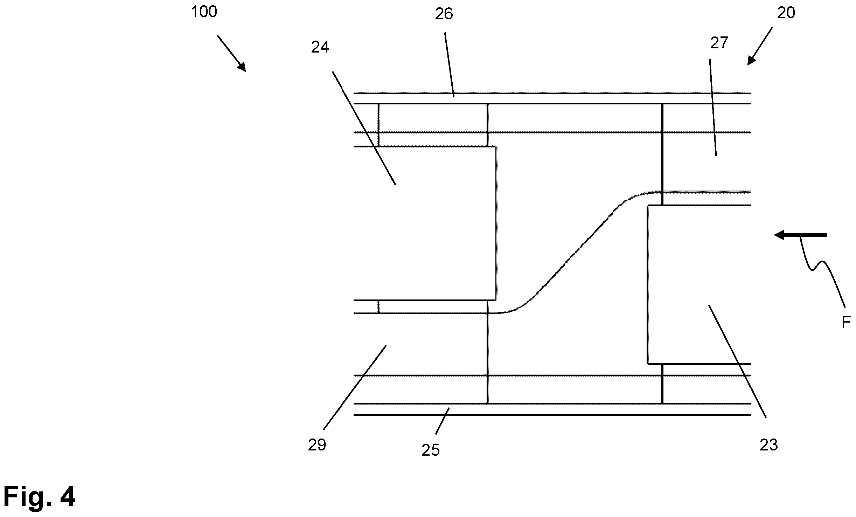

Figure 4 shows a detail of the third example of an exhaust gas after treatment device 100 in top view. A second unit 24 is arranged closer to the opposite side wall 26 of the catalyst container 20 than to the first side wall 25 and a second unit bypass passage 29 is arranged between the second unit 24 and the first side wall 25.

Exhaust gas leaving the first unit bypass passage 27 is guided to the second unit 24 and exhaust gas having passed the first unit 23 enters the second unit bypass passage 29.

The unit bypass passages 27, 29 allow a parallel arrangement of the units 23, 24, while the units 23, 24 geometrically are arranged in series.

While the catalyst units 23, 24 geometrically are arranged in series, that is one after the other, they are functionally arranged in parallel. Thus, there is only a small pressure drop along the flow direction as compared to a serial functional arrangement.

Figure 5 shows a schematic illustration of a fourth example of an exhaust gas treatment device 100 in a top view together with sectional views in planes A-A, B-B and C-C.

In this example the catalyst container 40 comprises three catalyst modules 40 arranged in series, wherein each of these modules 40 comprises two catalyst units 23, 24, which are functionally arranged in parallel, and respective first and second unit bypass passages 27, 29.

Within each catalyst module 40, the catalyst elements 21 are arranged in a pair of units 23, 24. The units 23, 24 are flowable in parallel and in the same flow direction F by the exhaust gas. The units 23, 24 are arranged such that they do not overlap in the flow direction F.

The units 23, 24 arranged in the catalyst modules 40 comprise six catalyst elements 21, functionally arranged in parallel.

Downstream the three catalyst modules 40 there is arranged an additional catalyst unit 51 comprising catalyst elements 21 arranged in parallel, which additional catalyst unit 51 cannot be bypassed by exhaust gas entering the catalyst container 40 via the orifice 31.

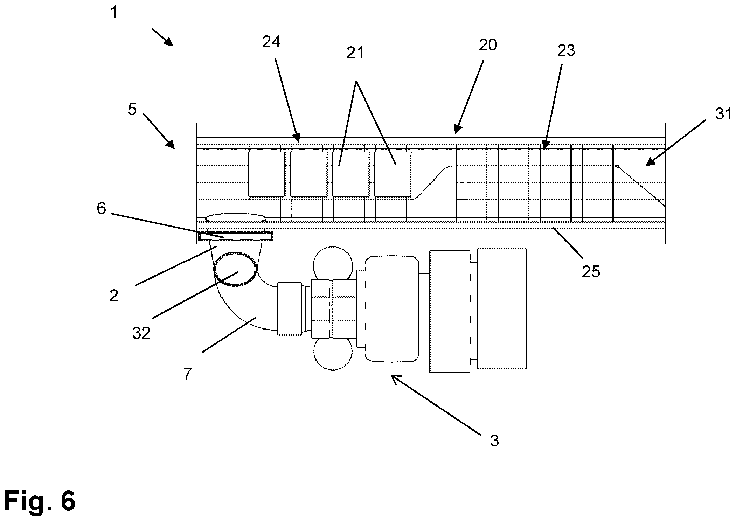

Figure 6 shows a schematic illustration of a detail of an example of a combustion engine 1 in top view.

The catalyst container comprises two catalyst units 23, 24 functionally arranged in parallel. In this example, each catalyst unit 23, 24 comprises catalyst elements 21 arranged in series.

In this example, the main outlet pipe 2 is arranged in a side wall 25 of the catalyst container 20. The main outlet pipe 2 and the bypass outlet pipe 32 merge into an exhaust line 7, which is fluidly connected to a turbocharger 3 positioned adjacent to the side wall 25 of the catalyst container 20.

Alternatively, the turbocharger 3 may be positioned side by side with a first longitudinal end 5 of the catalyst container 20.

Figure 7 shows a detail of a fifths example of an exhaust gas treatment device 100 in a perspective view.

The catalyst container 20 comprises a support 22 with rails 22.1 for guiding the catalyst modules 40.

Each catalyst module 40 comprises a frame 41 and catalyst elements 21 arranged in units 23,24 (see figures above).

The frame 41 has a profile complementary to the support 22 of the catalyst container 20. The frame 41 may be guided along the rails 22.1.

The frame 41 may be fixed to the profile 22 of the catalyst container 20 with help of a mounting frame 43.

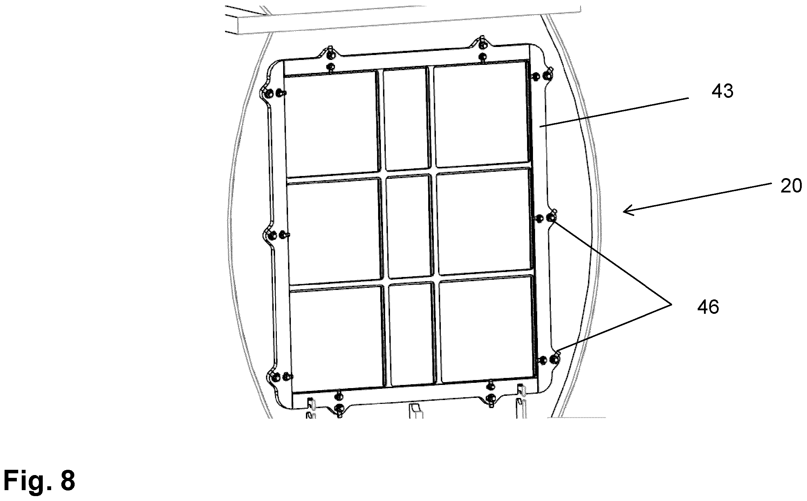

Figure 8 shows a detail of a fifths example of an exhaust gas treatment device 100 in a perspective view.

A mounting frame 43 is secured to the catalyst container 20 with screws 46.

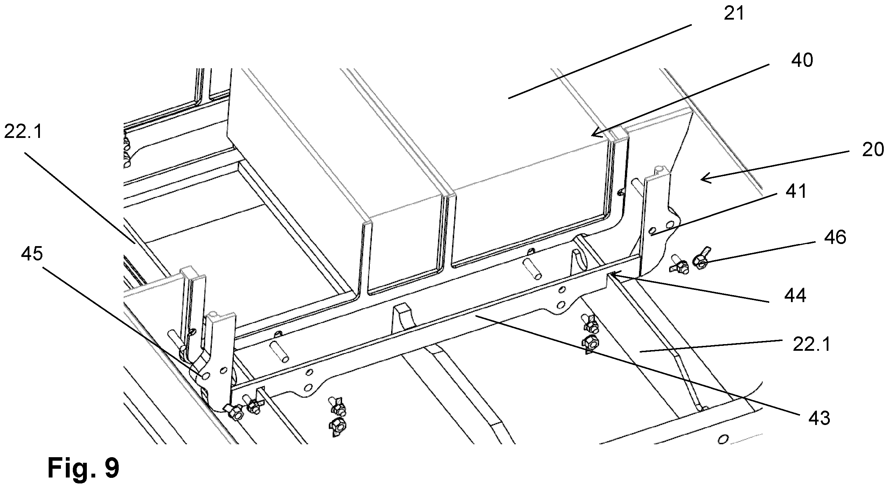

Figure 9 shows a detail of a fifths example of an exhaust gas treatment device 100 in a perspective view.

A mounting frame 43 comprises a complementary profile 44 with respect to the support 22 of the catalyst container 20.

The mounting frame 43 comprises holes 45 for receiving fixing elements 46 for connecting to a holding rib 22.2. of the catalyst container 20 and to the frame 41 of the catalyst module 40.

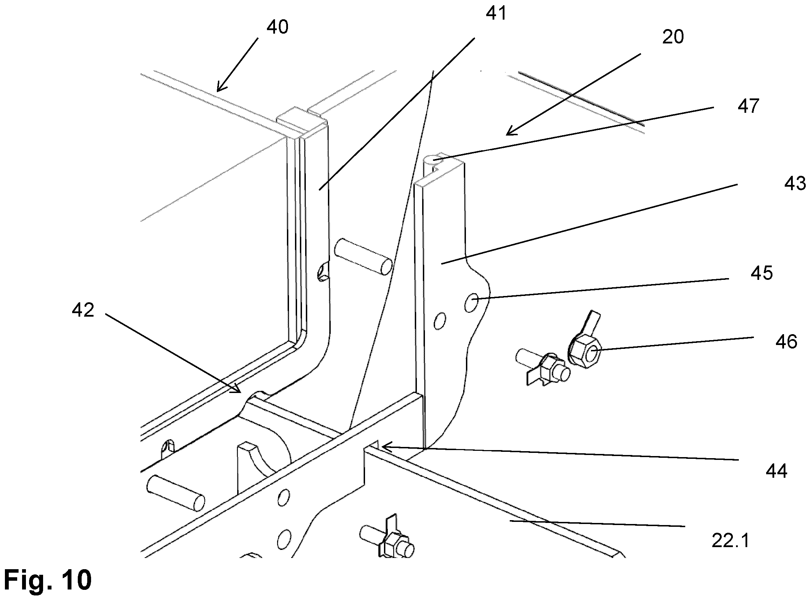

Figure 10 shows a detail of a fifths example of an exhaust gas treatment device 100 in a perspective view.

The mounting frame 43 further comprises a sealing 47.

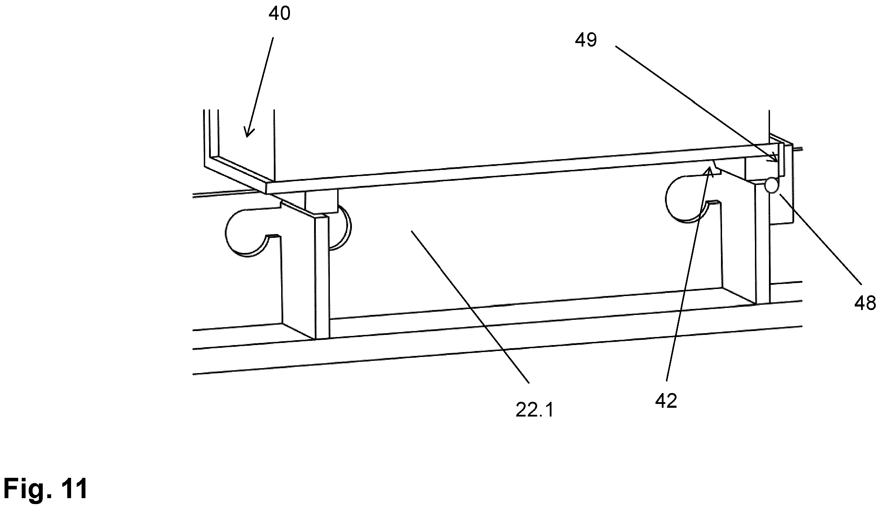

Figure 11 shows a detail of a fifths example of an exhaust gas treatment device 100 in a perspective view.

The catalyst container 20 (see figures above) comprises a stop element 48 with a stop surface 49.

The stop element 48 is fixedly mounted to the rail 22.1 of the catalyst container 20. A catalyst module 40 may be pushed along the rail 22.1 until it abuts the stop surface 49.

The stop element provides for an exact position of the catalyst modules 40 within the catalyst container 20 and guarantees an predefined distance between the modules.

## Claims

1. An exhaust gas treatment device (100) for an internal combustion engine (1) with at least two cylinders, preferably with an inner diameter of at least 200 mm each, in particular a dual-fuel internal combustion engine,
the exhaust gas treatment device (100) comprising
- an elongated exhaust manifold (10) extending in a longitudinal direction (L) and having at least one inlet (11) for exhaust gas from each cylinder,
- a catalyst container (20) comprising at least two catalyst elements (21), in particular SCR catalyst elements, wherein the exhaust manifold (10) is fluidly connected or connectable to the catalyst container (20) for allowing, during operation, a flow of the exhaust gas from the exhaust manifold (10) through the catalyst elements (21), wherein the catalyst elements (21) are arranged in at least two units (23, 24) of catalyst elements (21) which units are flowable in parallel and in the same flow direction (F) by the exhaust gas,
wherein the units (23, 24) are arranged such that they do at least not fully overlap in the flow direction (F), **characterized in that**
the exhaust gas treatment device (100) comprises a main outlet pipe (2), preferably arranged at a first longitudinal end (5) of the exhaust gas treatment device, fluidly connected or connectable to the catalyst container (20) and **in that**
the exhaust gas treatment device (100) comprises a bypass outlet pipe (32), preferably arranged at the first longitudinal end (5) of the exhaust gas treatment device, fluidly connected or connectable to the elongated exhaust manifold (10) .

2. The exhaust gas treatment device (100) according to claim 1, wherein the exhaust manifold (10) and the catalyst container (20) are arranged adjacently next to one another and are delimited from one another by at least one partition (30), and wherein the exhaust manifold (10) is fluidly connected or connectable to the catalyst container (20) via an orifice (31) provided in the at least one partition (30).

3. The exhaust gas treatment device (100) according to any one of the preceding claims, wherein a bypass outlet valve (33), preferably a butterfly valve, is arranged in the bypass outlet pipe (32).

4. The exhaust gas treatment device (100) according to any one of the preceding claims, wherein a main outlet valve (6), preferably a butterfly valve, is arranged in the main outlet pipe (2).

5. The exhaust gas treatment device (100) according to any one of the preceding claims, wherein the main outlet pipe (2) and the bypass outlet pipe (32) merge into an exhaust line (7), preferably downstream the bypass outlet valve (33) and/or downstream the main outlet valve (6).

6. The exhaust gas treatment device (100) according to any one of the preceding claims, wherein the units (23, 24) comprise catalyst elements (21) arranged in series and/or arranged in parallel with respect to the flow direction (F).

7. The exhaust gas treatment device (100) according to any one of the preceding claims, wherein
- at least a first unit (23) is arranged closer to a first side wall (25) of the catalyst container (20) than to the opposite side wall (26) of the catalyst container (20) and a first unit bypass passage (27) is arranged between the first unit (23) and the opposite side wall (26)
and
- at least a second unit (24) is arranged closer to the opposite side wall (26) than to the first side wall (25) and a second unit bypass passage (29) is arranged between the second unit (24) and the first side wall (25).

8. The exhaust gas treatment device (100) according to any one of the preceding claims, wherein at least one unit (23, 24) of catalyst elements (21) is arranged in a frame (41), thus forming a catalyst module (40).

9. The exhaust gas treatment device (100) of claim 8, wherein the exhaust gas treatment device comprises at least one catalyst module (40), wherein a first unit (23) and a second unit (24) of catalyst elements (21) are arranged in one common frame (41),
wherein the first unit (23) and the second unit (24) are arranged in the frame (41) such that the first and the second units (23, 24) are flowable in parallel and in the same flow direction (F) by the exhaust gas, and
wherein the first and the second units (23, 24) are arranged in the catalyst module (40) such that they do not fully overlap in the flow direction (F).

10. The exhaust gas treatment device (100) according to any one of the claims 8 to 9, wherein the catalyst container (20) comprises a housing having a support (22) for guiding and supporting at least one catalyst module (40), and wherein the frame (41) of the at least one catalyst module (4) comprises a complementary profile (42) for engaging with the support (22), and
preferably wherein the support (22) comprises at least one rail (22.1) and/or a holding rib.

11. The exhaust gas treatment device (100) according to any one of the claims 8 to 10, wherein the catalyst container (20) comprises a closable opening (28) for inserting and removing the catalyst module (40), in particular arranged at a second longitudinal end (8) opposite the first longitudinal end (5).

12. The exhaust gas treatment device (100) according to any one of the preceding claims, in particular according to any one of the claims 9 to 11, wherein the catalyst container (20) comprises at least one catalyst module (40) with a first unit (23) and a second unit (24) of catalyst elements (21) being arranged in a common frame (41), and
wherein the catalyst container (20) comprises at least one additional unit (51) of catalyst elements (21) arranged downstream of this at least one catalyst module (40) and configured such that the additional unit (51) cannot be bypassed.

13. An internal combustion engine (1) comprising at least two cylinders, in particular up to eight cylinders, advantageously up to six cylinders, and at least one exhaust gas treatment device (100) according to any one of the preceding claims.

14. The internal combustion engine (1) according to claim 13 comprising a turbocharger (3) which is fluidly connectable or connected to the bypass outlet pipe (32) and/or the main outlet pipe (2) and/or to an exhaust line (7), and in particular wherein the turbocharger (3) is arranged on the first longitudinal end (5) of the exhaust gas treatment device (100).

15. A catalyst module (40) for inserting into a housing of an exhaust gas treatment device (100) according to any one of the claims 1 to 12, the catalyst module (40) comprising a frame (41), at least a first unit (23) of catalyst elements (21) and at least a second unit (24) of catalyst elements (21),
wherein the first unit (23) and the second unit (24) are arranged such that the first and the second units (23, 24) are flowable in parallel and in the same flow direction (F) by the exhaust gas, and
wherein the first and the second units (23, 24) are arranged in the catalyst module (40) such that they do not fully overlap in the flow direction (F).
